# EUROPEAN PATENT APPLICATION

(11) **EP 2 418 842 A2**
(43) Date of publication of application: **15.02.2012**
(21) Application number: 11170637.0
(22) Date of filing: 21.06.2011
(51) Int. Cl.: H04N 5/33, H04N 9/04

(54) **ZRGB system for dual detection**

(30) Priority: 12.08.2010 HR 20100451
(71) Applicant: Ziljak, Vilko, 10000 Zagreb (HR); Ziljak, Ivana, 10000 Zagreb (HR); Ziljak, Vujic Jana, 10000 Zagreb (HR); Pap, Klaudio, 10000 Zagreb (HR)
(72) Inventor: Ziljak, Vilko, 10000 Zagreb (HR); Ziljak, Ivana, 10000 Zagreb (HR); Ziljak, Vujic Jana, 10000 Zagreb (HR); Pap, Klaudio, 10000 Zagreb (HR)
(74) Representative: Betten & Resch

(57) **Abstract**

This innovation solves the problem of simultaneous parallel watching in two different parts of electromagnetic spectrum: visible range (400 nm to 700 nm) and Near Infrared NIR range (800 nm to 1000 nm). ZRGB system for dual detection consists of one digital camera with the screen in RGB standard and another modified digital camera, connected with the first one with the screen for NIR area - Z-image. The construction of the join base enables the moving of cameras along three axes, to adjust Z observation with the parallel RGB observation which is essential for near and distant objects as well as for mutual calibration. With the usage of Z markers on the object it is possible to improve the adjusting of two images and the overlapping of RGB pixel on Z pixel of the same addressed positions.

The system enables the detection of steganographic image built in with Infraredesign method as well as the shooting of the image pairs or of completely free pictures for archiving and for future analysis. The possibility of easy transportable detection of Infraredesign protection on the textile products, pharmaceutical products, all kinds of protected packaging and top-quality safety documents from the passport, identity card, up to the banknotes was created. With this system the authentication of works of art are improved. They can be archived in Z and RGB record and by subsequent integration algorithms they can be reproduced in special catalogues with the authentication characteristics. The benefit from ZRGB system is also in detection the protection of the portrait reproduction with the protected documents for the people authentication. In that case the authentication of people can be recorded on customs, police stations and other places for people authentication, the visible image on the front of the document as the RGB picture and the latent image of the person profile on the printed picture as Z picture.

## Description

### Technology area:

According to International Patent Classification the invention device can be classified with the following marks:
G03B 15/00-Special procedures in shooting; associated equipment
G03B 19/02-Cameras
G03B 33/00-Colour photo, different from the one obtained with ordinary illumination

### Technical problem and the solution of the technical problem which is demanded to be protected

This innovation solves the problem of the simultaneous parallel vision observation in two different parts of the electromagnetic spectrum: visual area (400 nm to 700 nm) and NIR (Near Infrared) area (800 nm to 1000 nm). There are numerous devices that can independently see in NIR area in so called night vision or by specialized scanners with barrier NIR filters but there is no effective easy transportable system for parallel simultaneous observation in the visual and NIR area in one geometric position. In many domains of human activities there is the need for simultaneous observation and recording visual and NIR area, from medicine to safety protection of documents or authentication of work of arts.

The main technical problem which the existing devices for NIR vision have is the non existence of two independent CCD fields; one being responsible for presentation and recording of RGB image of the visible part of the spectrum and another for presentation and response recording the NIR part of the spectrum as Z image with the aim of perfect pixel overlapping of two images from the same addresses. Simultaneous observation in this way, is the precondition for observer's decision whether to record the RGB or Z image in memory because of archiving for subsequent analyses or for momentary experimental fact,

The solution of the technical problem is the creation of ZRGB system for dual detection which consists of one digital camera with the screen in RGB standard, movable along the axis of rotation and another digital camera connected with the first one via common base, with Z response in NIR area, movable along the two remaining axes. In the designed system the Z digital camera is identical to RGB camera, according to the resolution characteristics (CCD field) and optics, it is only modified with NIR filter so, that its CCD field is illuminated with only NIR response which is recorded as Z image.

In such desired simultaneous observation there are technical problems which originate from the observation conditions and from the construction of the common base itself. The construction of the common base is never perfect either because of the possible usage of different materials in final base production or because of the impossibility of keeping the starting conditions in the position during the life time of the used system. Because of that, on the side of Z camera there is the built in rotation possibility, of moving its contact point along the two axes and on the side of RGB camera there is the possibility of rotation of the contact point along one axis. In this way the user can adjust viewing and shooting the Z image in relation to the RGB image from the first camera no matter if he observes the object in longer or shorter lengths or if the production of the common base does not enable the starting favourable overlapping of RGB image and of the Z image in space. In order to solve this problem technically better the four groups of markers were prepared, classified because of their double response properties in the visible NIR area: the dark RGB record and the dark Z record, the dark RGB record and the light Z record, the light RGB record and the dark Z record, the light RGB record and the light Z record.

In the control processes of authentication of security documents with Infraredesign protection technique there is the technical problem of searching the position of the built in protected information. In this way the person can watch all the time parallel, in the same scene the protected document in the visible and in NIR part of the spectrum. Such pairs of images can go into the forgery archive or they can serve as the base of originals for future document authentication.

### State-of-the-art

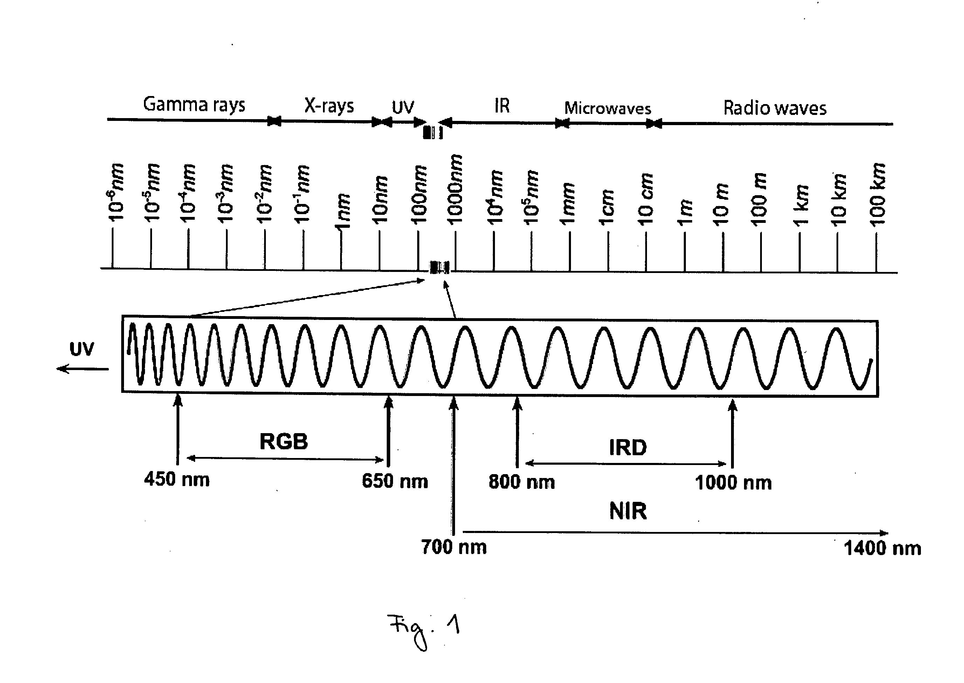

There are numerous instruments today which can be used for observation in NIR part of the spectrum. Mostly it is due to the development of CCD technology which is massively used in all the kinds of digital cameras. The infrared cameras (IC) are used for detection of infrared part of the electromagnetic radiation spectrum. IC spectrum is divided into 3 parts according to CIE (The International Commision on Illumination): IR-A 700 nm-1400 nm, IR-B 1400 nm-3000 nm and IR-C 3000 nm-1 mm. The IR-A area is considered to be close to the infrared area (NearIR) as the basic part of the spectrum for observing in this system (Figure 1). The defined area is from 750 nm to 1075 nm.

Figure 1 shows a presentation of the electromagnetic spectrum and the area of interest

The end of examination areas of the spectral characteristics of interest is from 1075 nm because CCD sensors are based on silicon and with their compounds limited to the upper wavelength of 1100 nm, where their relative sensitivity drops to zero. The new protection technique Infraredesign (IRD) is implemented for detection in the area of 800 nm to 1000 nm,, IRD area is very interesting for this innovation because it will be easier and improve the way and the system of detection. In figure 1 the area is marked which is used by classical digitizers, through RGB filters in contemporary digital cameras which have the built in IR filter for CCD illumination only with the wavelengths under 700 nm.

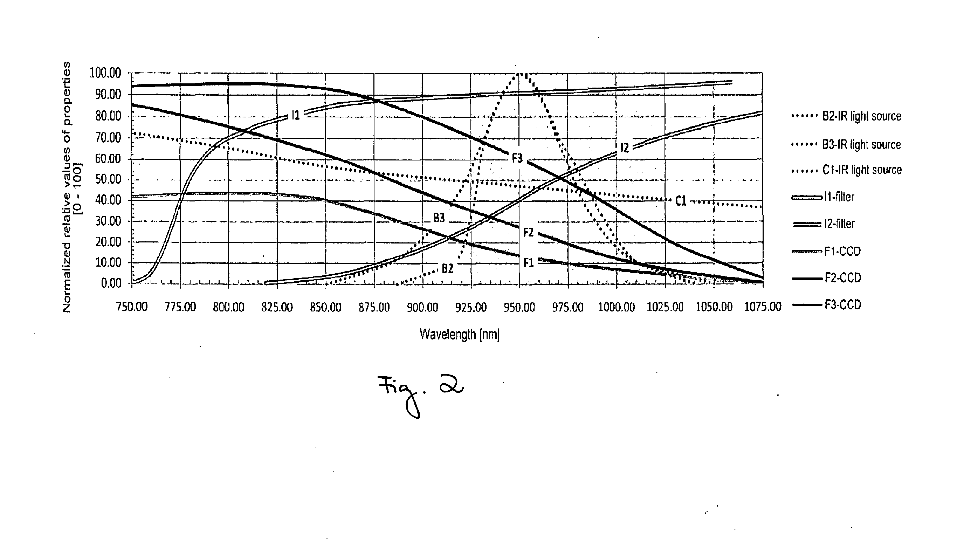

In the contemporary digital cameras the CCD fields are sensitive not only in the visible part of the spectrum but also in the broader part of the spectrum invisible to the eye. In the construction of the IR cameras, i.e. cameras, there are two types of cameras: cameras with IR source and cameras without IR source. The basic difference is that the first camera type (cameras with IR diodes) demands complete darkness of the visible spectrum type while the second type demands as much as possible electromagnetic radiation, because it does not count with the reflection of the artificial IR source. Contemporary state of technique, in the form of the classification of the spectral characteristics of the sources of lights, the classifications of the spectral characteristics of the optical filters and spectral characteristics of CCD sensors is presented in figure. From these characteristics the cross-section of those sources of infrared light, of those filters and CCD sensors is marked which have the best characteristics for observation in NIR spectrum area. These characteristics greatly depend on different production technologies and on type of the used materials for the production of coating on filters, on type of semiconductor element for light sources and on the way of production of the CCD sensor itself. In figure 2 the cross-section presents the favourable construction of the camera which contains the 11 or 12 filter, F1, F2 or F3 CCD sensor and B2, B3 and in some cases C1 infrared source of light.

Figure 2 shows a cross section of classification of IR sources, IR filters and CCD sensors

### Presentation of the innovation essence:

This innovation enables simultaneous parallel observation and shooting of some scene or object in visible and NIR spectrum part. The system consists of two digital cameras mutually connected via base. One digital camera is adjusted in classical RGB standard and it is called RGB apparatus and another one is modified into one-channel observation of Z response in NIR area and it is called Z apparatus, In the suggested system the Z digital camera is modified so that the classical protection red filter is removed, which does not let more than 650 nm wavelengths and it is replaced with the 12 filter (figure 2) which is enough for C1 - light source, which presents the day light containing enough quantity of NIR electromagnetic radiation, especially if better infrared source is used. Any other combination in the marked cross-section in figure 2 will satisfy the needs of the demanded detection,

Such constructed system can produce two, in pair, RGB and Z images which can be used for further analysis. In the system the Z digital camera is identical to RGB camera, according to its characteristics of the CCD fields and optics; it is only modified with NIR filter so that its CCD field is illuminated with only NIR response which is marked as Z image. So the obtained image pair RGB and Z is identical in pixel number in lines and columns. It has great importance if one wants the biggest possible overlapping of RGB and Z information in case when we want to make the program analysis of the image pixel pair.

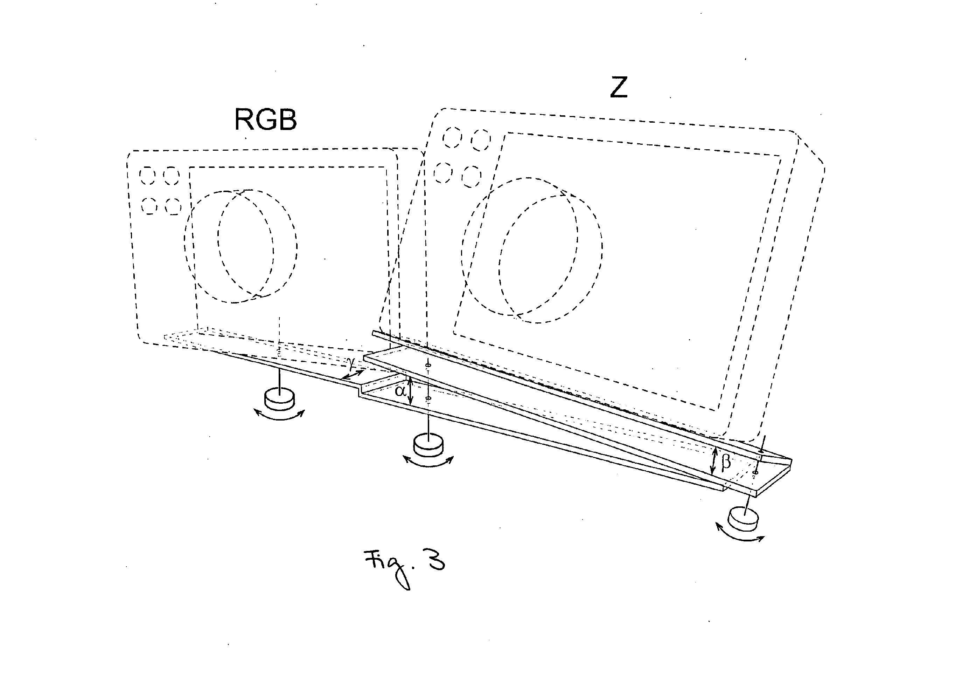

Figure 3 shows the construction of ZRGB digital system

Z digital camera has the possibility of moving two axes for adjusting Z image with the parallel RGB digital camera, which can rotate on the third axis, which is especially important for parallel observation and shooting near and distant structures and for the correction of the imperfect mutual starting positions of RGB camera and Z camera on common base (Figure 3). RGB camera rotates (y) while Z camera is adjusted over the two degrees of freedom (α and β).

The adjusting is done over the three degrees of freedom with parallel viewing on two screens and for the top-grade overlapping four marker sets are used which are applied in dependence on double characteristic of the observed physical object. As the markers must be clearly distinguished in relation to the background on which they are put, their choice, during the marking, must be viewed parallel on RGB and Z monitor and must be chosen between these combinations: dRGBdZ marker - the dark RGB record and dark Z record, dRGBIZ marker- the dark RGB record and the light Z record, IRGBdZ marker - the light RGB record and the dark Z record, IRGBIZ marker-the light RGB record and the light Z record. The practicality of ZRGB system for dual detection is achieved by the easy transportable construction which is insensitive to dissembling and accidental bending, because the parallel watching is quickly adjusted with the three degrees of freedom. At the same time each camera can be used completely independently for single observing and shooting.

The procedure of innovation application consists of these basic phases:
1. RGB and Z camera are started;
2. Through the screen of RGB camera the desired scene is chosen, and one sees parallel the NIR response on Z camera. The adjusting of scenes of one and another camera for distant objects can be done over three axes on pure visual basis;
3. If one wants to adjust the Z scene to RGB scene, for the needs of perfect overlapping, the markers must be fastened on the object to be noticeable especially in RGB presentation and especially in Z presentation which is achieved by suitable choice from the four marker classes;
4. By adjusting the three axes the additional setting the scene of Z camera is done so that all the markers stay as near as possible to the positions of RGB camera;
5. Shooting with RGB camera and Z camera and creating the Z and RGB images in separate memories.

### The industrial usage of the innovation

The possibility of observation and recording, simultaneous and double one, in RGB and NIR spectrum is necessary in many fields of human work and investigations. The double observation and archiving of RGB and Z digital record is necessary in the field of medical investigations as well as in the investigation of nature from flora and fauna.

The creation of such system enables the detection of steganographic IRD image. In the process of authentication of the original or the forgery it is possible to watch the protected document in the visible part of the spectrum and in the NIR spectrum, all the time, and parallel in the same scene. In the desired moment it is possible to do the digital shooting of RGB image and Z image. Such image pairs can be put into the archives as the forgery or they can be used for creation of the original bases for the future authentication of documents.

The possibility was made, of easy transferable authentication system of existing or none existing infraredesign protection on textile products, pharmaceutical products, all kinds of protected packaging and top-quality safety documents from the passport, identity card to the banknotes.

ZRGB system for dual detection improves the authentication of work of arts. Today the qualitative evaluation of the difference of one painting of art from another or the original from the forgery based on the infrared response is widely spread today. With this system it will be possible to investigate the quantitative evaluation of difference as the new investigation area of the work of arts because we are interested in difference of RGB and Z value for the same positioned pixel, which opens the possibility of determination the correlation between the RGB and Z variables on the whole digitalized scene.

Such system opens completely new innovative possibilities of image reproduction by means of pixel pair created from the same positioned RGB and Z pixels. This would be the reproduction of RGB image on Z image. The work of arts can be archived in Z and RGB record and by subsequent integration algorithm can be later reproduced in special catalogues with the authentication characteristics. The application of ZRGB system is in detection the protection of portrait reproduction with the safety portrait on the protected documents. In this case, on customs, police stations and other authentication places of people the records can be done separately or simultaneously, the visible portrait image on the document as RGB picture and the hidden image of the person in profile, printed as Z image (NIR response).

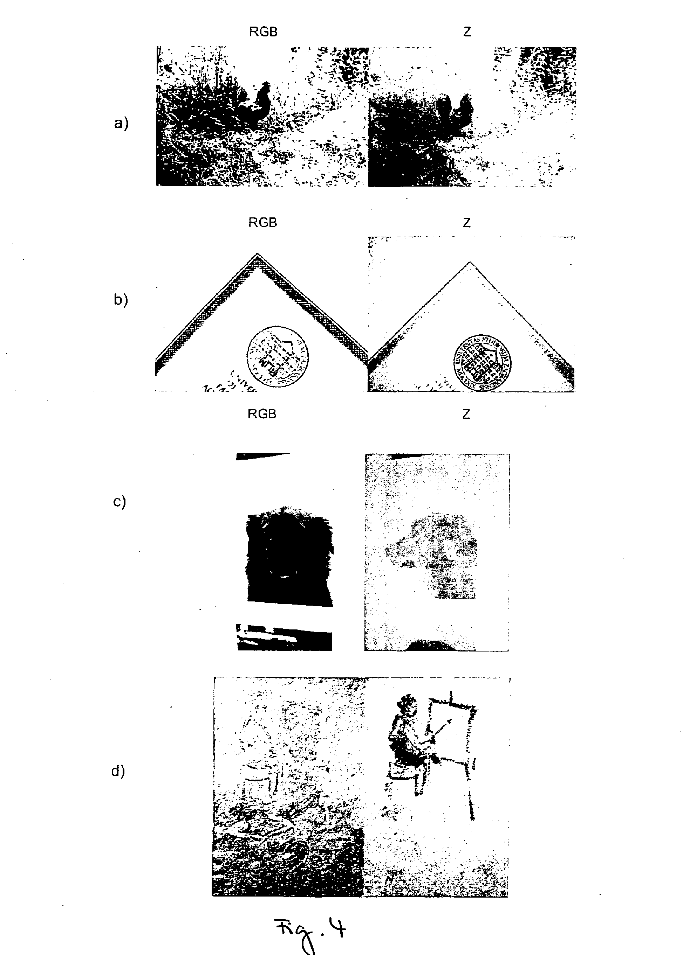

In Figure 4 the four experimental usage results of the ZRGB digital system are presented. ZRGB pair in figure "a" presents the example of flora and fauna observation. In the example "b" we can see the usage of the system during the detection of the built in Infraredesign (IRD) protection on official document. In the example "c" the detection of the built in security portrait profile into the original en face portrait is demonstrated. On the last "d" example we can see the usage of the system during the authentication of the original work of art. In the angles of RGB and Z images there are traces of the adjusting marker.

In summary an embodiment of the invention can be described as follows:

This innovation solves the problem of simultaneous parallel watching in two different parts of electromagnetic spectrum: visible range (400 nm to 700 nm) and Near Infrared NIR range (800 nm to 1000 nm). ZRGB system for dual detection consists of one digital camera with the screen in RGB standard and another modified digital camera, connected with the first one with the screen for NIR area ― Z-image. The construction of the join base enables the moving of cameras along three axes, to adjust Z observation with the parallel RGB observation which is essential for near and distant objects as well as for mutual calibration. With the usage of Z markers on the object it is possible to improve the adjusting of two images and the overlapping of RGB pixel on Z pixel of the same addressed positions.

The system enables the detection of steganographic image built in with Infraredesign method as well as the shooting of the image pairs or of completely free pictures for archiving and for future analysis. The possibility of easy transportable detection of Infraredesign protection on the textile products, pharmaceutical products, all kinds of protected packaging and top-quality safety documents from the passport, identity card, up to the banknotes was created. With this system the authentication of works of art are improved. They can be archived in Z and RGB record and by subsequent integration algorithms they can be reproduced in special catalogues with the authentication characteristics. The benefit from ZRGB system is also in detection the protection of the portrait reproduction with the protected documents for the people authentication. In that case the authentication of people can be recorded on customs, police stations and other places for people authentication, the visible image on the front of the document as the RGB picture and the latent image of the person profile on the printed picture as Z picture.

## Claims

1. ZRGB system for dual detection, **characterized by the fact**, that it comprises one digital camera with the_screen in RGB standard, movable according the rotation axis and another digital camera movable along the two axes, connected with the first one, for the Z value record in NIR (Near Infra Red) area.

2. ZRGB system for dual detection according to claim 1., **characterized by the fact**, that it enables the parallel simultaneous viewing and investigation in the visible spectrum and in NIR spectrum with the possibility of digital shooting of the same scene which gives a pair of two RGB and Z images.

3. ZRGB system for dual detection according to any of claims 1. and 2., **characterized by the fact**, that the Z digital camera is modified so that its classical protection infrared filter which does not let light waves more than 650 nm long is replaced by I2 filter (figure 2) which is enough for the filtering of the daylight which contains enough NIR quantity of electromagnetic radiation, especially with the usage of better infrared source.

4. ZRGB system for dual detection, according to any of claims 1., 2. and 3., **characterized by the fact**, that the construction of the common base is such that Z digital camera has the possibility of moving along the two axes (α i β) for adjusting the Z picture with the parallel RGB digital camera which rotates on the third axis (γ) for observing the near and distant objects and for correction of mutually imperfect starting positions of RGB and Z cameras.

5. ZRGB system for dual detection according to any of claims 1., 2., 3. and 4., **characterized by the fact**, that the application of specially prepared Z markers on the physical model or scene can enable the aimed overlapping of RGB pixel and Z pixel on the same addressed position of the picture by adjusting over the three degree of freedom which is enabled by the construction of the base.

6. ZRGB system for dual detection, according to any of claims 1., 2., 3., 4. and 5., **characterized by the fact**, that by creating such system the detection of steganographic image is enabled which is hidden by Infreredesign method with the possibility of digital shooting, archiving and authentication as well as the development of the new reproduction method of RGB image on Z image.
